**Europäisches Patentamt**

**European Patent Office**

**Office européen des brevets**

(19)

(11) Veröffentlichungsnummer: **0 075 098**
**B1**

# (12) EUROPÄISCHE PATENTSCHRIFT

(45) Veröffentlichungstag der Patentschrift:
**02.04.86**

(21) Anmeldenummer: **82107211.3**

(22) Anmeldetag: **10.08.82**

(51) Int. Cl.⁴: **B 60 T 17/02**, F 04 B 49/00

(54) Einrichtung zur Erzeugung von Druckgas.

(30) Priorität: **17.09.81 DE 3136949**

(43) Veröffentlichungstag der Anmeldung:
**30.03.83 Patentblatt 83/13**

(45) Bekanntmachung des Hinweises auf die Patenterteilung:
**02.04.86 Patentblatt 86/14**

(84) Benannte Vertragsstaaten:
**AT CH DE FR GB IT LI SE**

(56) Entgegenhaltungen:
**DE - A - 1 939 064
DE - A - 2 726 494
DE - B - 1 061 475
DE - B - 1 147 856
DE - B - 1 200 148
FR - A - 2 202 542
GB - A - 1 006 806**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Heger, Werner, Burgdorfer Kirchweg 27, D-3160 Lehrte-Kolshorn (DE)**
Erfinder: **Schlossarcyk, Heinrich, Poppenburger Strasse 10, D-3015 Wennigsen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

**Beschreibung**

Die Erfindung betrifft eine Einrichtung zur Erzeugung von Druckgas, insbesondere für eine Druckluftbremsanlage, gemäss dem Oberbegriff des Patentanspruchs 1.

Eine solche Einrichtung ist durch die DE-B-1 200 148 bekannt. Bei der vorbekannten Einrichtung wird der Verdichter in seiner Leerlaufphase durch Offenhalten des Saugventils entlastet. Dies geschieht durch eine Einrichtung, die unter dem Begriff «Governorregelung» bekannt ist. Im Zylinderkopf des Verdichters ist ein Steuerkolben, der, wenn er mit Luftdruck beaufschlagt wird, das Saugventil öffnet. Der Steuerkolben ist über einen Steueranschluss des Verdichters mit einem Regelventil verbunden, das sich in der Druckleitung zum Verbraucher befindet. Steigt der Luftdruck in der zum Verbraucher führenden Druckleitung auf eine durch das Regelventil einstellbare Druckhöhe an, dann verbindet das Regelventil die zum Verbraucher führende Druckleitung mit dem Steuerkolben. Liegt der Druck in der Leitung zum Verbraucher unterhalb einer durch das Regelventil einstellbaren Druckhöhe, dann ist der Steuerkolben drucklos, weil er über das Regelventil mit der Atmosphäre verbunden ist.

Bei dieser Abschalttechnik wird zwar die Antriebsleistung des Luftpressers weitgehendst ausgeschaltet, da das Saugventil in der Leerlaufphase des Luftpressers offengehalten wird. Es entstehen jedoch relativ hohe Temperaturen, da kein Luftaustausch stattfindet und die heisse Luft durch die Kolbenbewegungen zwischen dem Saugraum und dem Verdichtungsraum hin- und herströmt und sich dabei immer mehr aufheizt. Der nicht vorhandene Luftaustausch der sich hin- und herbewegenden Luft führt zu einer relativ langen Verweildauer des nicht erwünschten Öles aus dem Kurbelgehäuse im Saug- und Verdichtungsraum, was infolge der hohen Temperaturen zu Ölkohlebildungen führt. Durch die DE-A-2 726 494 ist auch eine andere Methode der Leerlaufregelung bekannt. Es handelt sich hierbei um die Verwendung eines üblichen Druckreglers.

Der Druckregler, dessen Anordnung in der Druckleitung zwischen dem Luftpresser und der Druckluftverbraucheranlage (Luftbehälter) erfolgt, unterbricht bei Erreichen eines eingestellten Höchstdruckes die weitere Förderung in die Verbraucheranlage, indem die Strömungsrichtung der vom Luftpresser erzeugten Druckluft in die Atmosphäre umgelenkt wird. Der Luftpresser arbeitet somit in dieser Phase im Leerlauf.

Hierbei muss jedoch der Nachteil in Kauf genommen werden, dass der Luftpresser auch in Entlüftungsstellung des Druckreglers mit einer bestimmten Antriebsleistung weiterarbeitet, da weiterhin auch im Leerlauf Druckluft mit vermindertem Druck von dem Luftpresser erzeugt wird.

Der Erfindung liegt deshalb die Aufgabe zugrunde, eine Einrichtung der eingangs erwähnten Art zu schaffen, bei der der Luftpresser, unter Vermeidung der durch die Governor- oder Druckreglerregelung vorhandenen Nachteile, ohne oder nur mit einer minimalen Antriebsleistung in der Leerlaufphase arbeitet bzw. die Ventilverlustleistungen reduziert werden.

Diese Aufgabe wird durch die im Patentanspruch 1 aufgeführte Erfindung gelöst. Weiterbildungen und vorteilhafte Ausführungsbeispiele der Erfindung sind in den Unteransprüchen angegeben.

Bei der Erfindung werden sinngemäss die beiden oben erwähnten Prinzipien («Governor» und Druckregler) zusammen verwendet. Dies bedeutet eine doppelte Entlastung des Verdichters, so dass die erwähnten Nachteile der Nur-«Governor»- oder Nur-Druckreglerregelung nicht auftreten.

Bei der Erfindung ergibt sich der Vorteil, dass durch die grösseren Querschnitte, welche durch die bei einem Verdichtungshub des Kolbens nunmehr offenen Ventile (Saug- und Druckventil) entstehen, die Antriebsleistung in der Leerlaufphase noch niedriger wird, als dies bei einer «Governor»-Regelung oder nur Druckregler-Regelung schon der Fall ist. Die Koppelung der beiden Regelungsarten bewirkt, dass in der Leerlaufphase die über das offene Ansaugventil hin- und herströmende Luft durch das Druckventil zum Teil abgeleitet wird. Dies bedeutet, dass gleichzeitig eine Abführung der Wärme stattfindet. Die Temperaturen sind dadurch erheblich niedriger und die Bildung von Ölkohle wird weitgehendst verhindert, zumal das Öl aus dem Verdichtungsraum über den offenen Druckregler abtransportiert wird.

Die Erfindung wird nachfolgend anhand von Ausführungsbeispielen, die in den Zeichnungen dargestellt sind, näher erläutert.

Es zeigen:

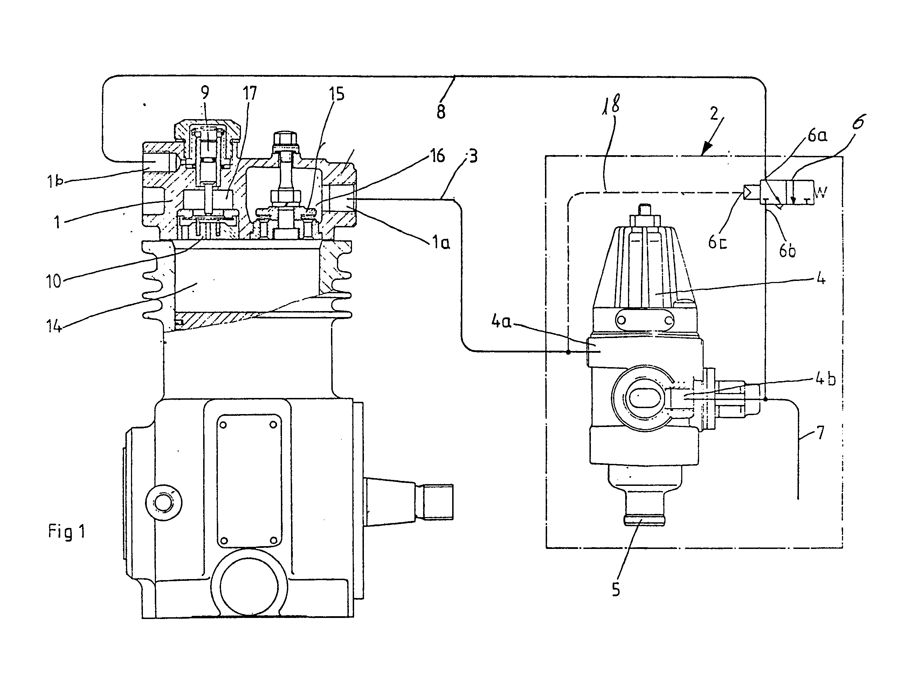

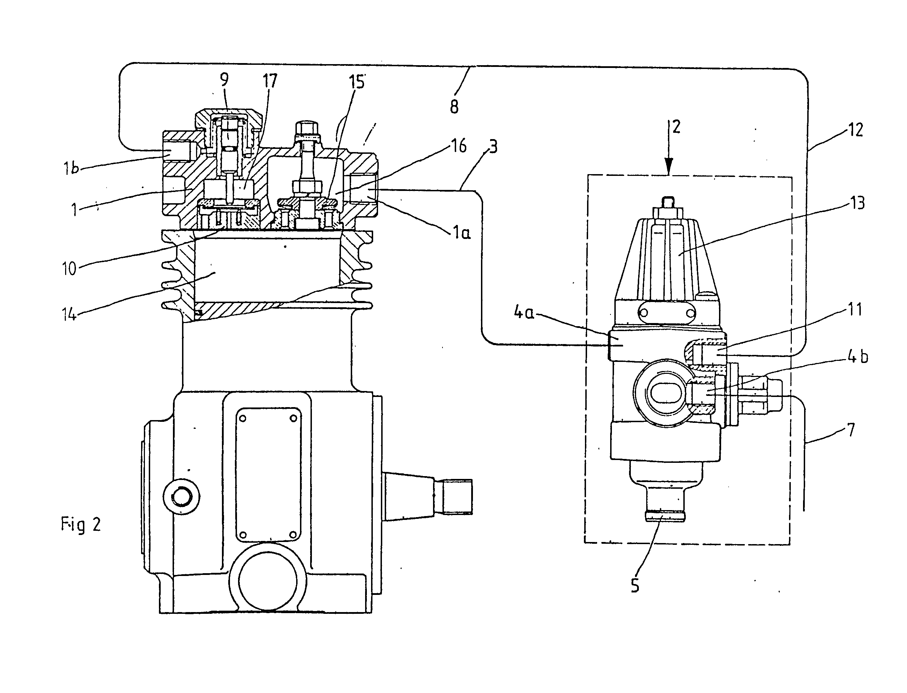

Fig. 1 eine Drucklufterzeugeranlage, deren Druckhöhe sowohl von einem Druckregler- als auch von einem «Governor»-ähnlichen Wegeventil geregelt ist und Fig. 2 eine Drucklufterzeugeranlage gemäss Fig. 1, jedoch mit einer in einem Gehäuse zusammengefassten Kombination Druckregler/«Governor».

Gemäss den Fig. 1 und 2 besteht die Drucklufterzeugeranlage aus einem Luftpresser 1 und aus einer Druckregelventileinrichtung 2. Der Luftpresser 1 ist mit seinem Anschluss 1a über eine Druckleitung 3 mit dem Druckregler 4 bzw. mit der Ventilkombination 13 über deren Einlassanschluss 4a verbunden. Ein Auslassanschluss 4b des Druckreglers 4 bzw. der Ventilkombination 13 führt über eine Druckleitung 7 zu den Verbrauchern (Luftbehälter). Der Druckregler 4 bzw. die Ventilkombination 13 verfügt über eine in die Atmosphäre führende Öffnung 5.

In dem Ausführungsbeispiel gemäss Fig. 1 ist über einen Anschluss 1b des Luftpressers 1 ein Abschaltkolben 9 über eine Steuerleitung 8 und ein dazwischengeschaltetes, als 3/2-Wegeventil bezeichnetes Umschaltventil 6 von der Druckluft der Verbraucheranlage beaufschlagbar, so dass eine Verbindung zwischen der zum Verbraucher führenden Druckleitung 7 über einen Steuereingang 6b und einen Steuerausgang 6a des Umschaltventils 6 mit der Steuerleitung 8 hergestellt ist. Der Schaltimpuls für das Umschaltventil 6 in die eine Verbindung zwischen der Druckleitung 7 und der Steuerleitung 8 herstellende Schaltstellung erfolgt über eine Verbindungsleitung 18 zwischen der Druckleitung 3 und einem Steuereingang 6c des Umschaltventils 6, wobei der Impuls durch die Entlüftung der Druckleitung 3 ausgelöst wird. Der Schaltkolben 9 steht in Eingriff mit dem Saugventil 10 des Luftpressers 1 in der Weise, dass in Abschaltstellung des Schaltkolbens 9 infolge Beaufschlagung mit Druckluft, das Saugventil 10 geöffnet ist. Das Ausführungsbeispiel gemäss Fig. 2 stellt dagegen eine Druckregelventileinrichtung 13 dar, in welcher der Druckregler 4 und ein als Governor bezeichnetes Umschaltventil in einem Gehäuse zusammengefast sind. Die Druckverbindung dieser Druckregelventileinrichtung 13 mit dem Luftpresser 1 ist dieselbe wie vorher beschrieben. Lediglich die Verbindung des mit dem Druckregler in einem Gehäuse angeordneten Governors mit dem Abschaltkolben 9 besteht hier über einen Steueranschluss 11 des gemeinsamen Gehäuses und eine Steuerleitung 12.

Die mit der erfindungsgemässen Druckregelventileinrichtung 4, 6; 13 ausgestattete Drucklufterzeugeranlage arbeitet wie folgt:

Die vom Luftpresser 1 erzeugte Druckluft gelangt über den Druckanschlus 1a, die Druckleitung 3, die Anschlüsse 4a und 4b des Druckreglers 4 bzw. der Druckregelventileinrichtung 13 in die zum Verbraucher führende Druckleitung 7. Beim Erreichen der im Druckregler 4 bzw. in der Druckregelventileinrichtung 13 eingestellten Druckhöhe schaltet das Ventil 4, 13 um und die Druckluft aus der Druckleitung 3 wird über die Öffnung 5 in die Atmosphäre geleitet. Die gleichzeitig sich entlüftende Druckleitung 3 löst im Umschaltventil 6 über die Leitung 18 und den Steuereingang 6c des Umschaltventils 6 einen Schaltimpuls aus und stellt eine Verbindung der Druckleitung 7 des Verbrauchers über den Steuereingang 6b und den Steuerausgang 6a des Umschaltventils 6 mit der Steuerleitung 8 her. Das die Funktion des Governors ausführende Umschaltventil der Druckregelventileinrichtung 13 (Fig. 2) ist in seiner Umschaltfunktion so eingestellt, dass sich die Umschaltung bei Erreichen derselben Druckhöhe der Verbraucheranlage vollzieht, wie die Druckhöhe, die die Umleitung in die Atmosphäre schaltet, so dass hier eine Verbindung zwischen der Druckleitung 7 über den Ausgangsanschluss 11 der Druckregelventileinrichtung 13 mit der Steuerleitung 12 hergestellt ist.

Die nunmehr aus der Verbraucheranlage (Leitung 7) über die Steuerleitung 8, 12 auf den Abschaltkolben 9 geleitete Druckluft öffnet das Saugventil 10 so lange, bis bei Erreichen eines bestimmten Druckabfalls der Verbraucheranlage beide Regelventile 4, 6; 13 ihre alte Arbeitsstellung einnehmen und die Leerlaufphase des Luftpressers 1 wieder durch eine Lastphase abgelöst wird.

Während der Leerlaufphase 1 gelangt ein Teil der in den Verdichtungsraum 14 des Luftpressers 1 angesaugten Luft über das Druckventil 15 in den Druckraum 16 und weiter über den Anschluss 1a, die Druckleitung 3 zum Ventil 4, 13 und ein anderer Teil gelangt in den Saugraum 17 zurück. Es wird also nur ein Teil der Luft zwischen dem Saugraum 17 und dem Verdichtungsraum 14 hin- und herbewegt, während ein anderer Teil in die Anlage bzw. in die Atmopshäre abfliesst. Dies bedeutet einen teilweisen Abfluss der durch die Hin- und Herbewegung erhitzten Luft und Verminderung der Verdichtungsarbeit im Verdichtungsraum, d.h. Verminderung der Antriebsleistung, infolge der Förderstromverzweigung über das ständig offene Saugventil 10 und über das Druckventil 15 und die Druckregleröffnung 5.

Es ist vorstellbar, dass anstelle des 3/2-Wegeventils 6 ein als «Governor» bezeichnetes Umschaltventil in den Druckregler eingebaut werden kann. Bei dieser Bauweise entfällt die Leitung 18 (Fig. 1) zwischen der Druckleitung 3 und dem Umschaltventil 6 und somit auch der Steuereingang 6c. Es besteht dann also zur Schaltung des Umschaltventils auf Durchgang nur die Verbindung mit der Druckleitung 7.

Da hier beide Ventile – Druckregler und Umschaltventil – von dem Druck des Verbrauchers geschaltet werden, ergibt sich der Vorteil, dass zwischen den beiden Ventilen eine genaue Übereinstimmung der Schaltpunkte besteht.

Diese Übereinstimmung wird zwangsläufig in der gemäss Fig. 2 dargestellten kombinierten Bauweise erzielt. Der im gemeinsamen Druckreglergehäuse erzeugte Schaltdruck steuert gleichzeitig ein im Druckregler integriertes Wegeventil, mittels dessen die Verbindungen der Leitungen 3/7 bzw. 3/5 und 7/12 hergestellt werden, und zugleich den im Luftpresser integrierten Schaltkolben 9. Durch die erwähnte gemeinsame Schaltdruckquelle ergibt sich der Vorteil, dass die Schaltvorgänge exakt und nahezu gleichzeitig ausgeführt werden.

**Patentansprüche**

1. Einrichtung zur Erzeugung von Druckgas, insbesondere für eine Druckluft-Bremsanlage, die folgende Merkmale aufweist:

a) es ist ein Verdichter vorgesehen, der über ein Saugventil das zu komprimierende Gas ansaugt und einen Druckgasausgang aufweist;

b) der Druckgasausgang des Verdichters ist über eine Druckleitung mit einem, insbesondere als Vorratsbehälter ausgebildeten, Verbraucher verbunden;

c) der Verdichter ist mit einem pneumatischen Steueranschluss zur Öffnung des Saugventils versehen;

d) es ist ein Umschaltventil vorgesehen, mit

dem der pneumatische Steueranschluss des Verdichters wahlweise an die Atmosphäre oder an die mit dem Druck des Verbrauchers beaufschlagte Druckleitung (7) anschliessbar ist, derart, dass das Umschaltventil (6) bei Unterschreiten eines vorbestimmten Druckes in der mit dem Druck des Verbrauchers beaufschlagten Druckleitung (7) an die Atmosphäre angeschlossen ist;

gekennzeichnet durch folgende Merkmale:

e) in der Druckleitung (3, 7) ist ein Druckregler (4, 13) angeordnet, über den ein mit dem Druckgasausgang (1a) des Verdichters (1) verbundenes erstes Teilstück (3) der Druckleitung (3, 7) in Abhängigkeit vom Druck des Verbrauchers entlüftbar ist;
f) zur Betätigung des Umschaltventils (6) weist dieses eine Betätigungseinrichtung auf, die so angeordnet und ausgebildet ist, dass der pneumatische Steueranschluss (1b) des Verdichters (1) bei einer Entlüftung des ersten Teilstückes (3) mit einem mit dem Druck des Verbrauchers beaufschlagten zweiten Teilstück (7) der Druckleitung (3, 7) verbunden ist.

2. Einrichtung zur Erzeugung von Druckgas nach Anspruch 1, gekennzeichnet durch folgende Merkmale:

a) die Betätigungseinrichtung des Umschaltventils (6) weist einen pneumatischen Steuereingang (6c) auf, der mit dem ersten Teilstück (3) der Druckleitung (3, 7) verbunden ist;
b) das Umschaltventil (6) wird bei Erreichen eines vorbestimmten Druckes in dem ersten Teilstück (3) der Druckleitung (3, 7) umgeschaltet.

3. Einrichtung zur Erzeugung von Druckgas nach Anspruch 1, dadurch gekennzeichnet, dass die mit dem Druck des Verbrauchers beaufschlagte Druckleitung (7) von den zwischen dem Druckregler (4, 13) und dem Verbraucher liegenden zweiten Teilstück (7) der Druckleitung (3, 7) gebildet wird.
4. Einrichtung zur Erzeugung von Druckgas nach Anspruch 1, gekennzeichnet durch die folgenden Merkmale:

a) das Umschaltventil (6) ist im Druckregler (13) angeordnet;
b) der pneumatische Steuerausgang des Umschaltventils ist als Ausgangsanschluss (11) des Druckreglers (13) ausgebildet.

5. Einrichtung zur Erzeugung von Druckgas nach einem der vorhergehenden Ansprüche, dadurch gekennzeichnet, dass die Entlüftungseinrichtung (5) des Druckreglers (4, 13) und die Öffnungseinrichtung (1b, 8, 9, 6; 1b, 8, 9, 12, 11) für das Saugventil (10) des Verdichters (1) so bemessen und ausgebildet sind, dass der Verdichter (1) nach dem Erreichen eines vorgegebenen Druckes des dem Verbraucher zugeführten Druckgases im wesentlichen im gleichen Masse von der Entlüftungseinrichtung des Druckreglers (4, 13) und der Öffnungseinrichtung entlastet wird.

**Claims**

1. Device for producing compressed gas, especially for a compressed-air brake unit, having the following features:

a) a compressor is provided which draws in the gas to be compressed by way of a suction valve and has a compressed-gas outlet;
b) the compressed-gas outlet of the compressor is connected by way of a pressure line to a utilising means, especially a utilising means including a reservoir;
c) the compressor is provided with a pneumatic control connection for opening the suction valve;
d) a change-over valve is provided by which the pneumatic control connection of the compressor can be connected selectively to the atmosphere or to the pressure line (7) receiving the pressure of the utilising means in such a manner that when the pressure in the pressure line (7) that receives the pressure of the utilising means drops below a predetermined level, the change-over valve (6) is connected to the atmosphere;

characterised by the following features:

e) there is arranged in the pressure line (3, 7) a pressure control device (4, 13) by way of which a first part (3) of the pressure line (3, 7) connected to the compressed-gas outlet (1a) of the compressor (1) can be vented depending on the pressure of the utilising means;
f) for actuating the change-over valve (6) the latter has an actuating device which is so arranged and designed that when the first part (3) is vented the pneumatic control connection (1b) of the compressor (1) is connected to a second part (7) of the pressure line (3, 7), which part receives the pressure of the utilising means.

2. Device for producing compressed gas according to claim 1, characterised by the following features:

a) the actuating device of the change-over valve (6) has a pneumatic control input (6c) which is connected to the first part (3) of the pressure line (3, 7);
b) the change-over valve (6) is changed over when a predetermined pressure is reached in the first part (3) of the pressure line (3, 7).

3. Device for producing compressed gas according to claim 1, characterised in that the pressure line (7) receiving the pressure of the utilising means is formed by the second part (7) of the pressure line (3, 7) lying between the pressure control device (4, 13) and the utilising means.
4. Device for producing compressed gas according to claim 1, characterised by the following features:

a) the change-over valve (6) is arranged in the pressure-control device (13);

b) the pneumatic control output of the change-over valve is designed as an output connection (11) for the pressure control device (13).

5. Device for producing compressed gas according to any one of the preceding claims, characterised in that the venting device (5) of the pressure control device (4, 13) and the opening device (1b, 8, 9, 6; 1b, 8, 9, 12, 11) for the suction valve (10) of the compressor (1) are so dimensioned and designed that after a predetermined pressure of the compressed gas supplied to the utilising means has been reached the compressor (1) is vented to substantially the same extent by the venting device of the pressure-control device (4, 13) and the opening device.

**Revendications**

1. Dispositif de production de gaz comprimé, destiné en particulier à un équipement de freinage pneumatique, présentant les particularités suivantes:

a) un compresseur aspire le gaz à comprimer par un clapet d'aspiration et présente une sortie de gaz comprimé;

b) la sortie de gaz comprimé du compresseur est reliée par une canalisation de refoulement à un récepteur, et en particulier à un réservoir;

c) le compresseur est muni d'un raccord de commande pneumatique pour ouverture du clapet d'aspiration;

d) une valve d'inversion relie au choix le raccord de commande pneumatique du compresseur à l'air libre ou à la canalisation de refoulement (7) chargée par la pression du récepteur, de sorte que la valve d'inversion (6) est reliée à l'air libre quand la pression dans la canalisation de refoulement (7) chargée par la pression du récepteur tombe au-dessous d'une valeur prédéterminée,

et caractérisé en ce que:

e) la canalisation de refoulement (3, 7) contient un régulateur de pression (4, 13) qui permet de purger son premier tronçon (3), relié à la sortie de gaz comprimé (1a) du compresseur (1), en fonction de la pression du récepteur;

f) pour sa manœuvre, la valve d'inversion (6) comporte un dispositif monté et réalisé de façon que le raccord de commande pneumatique (1b) du compresseur (1) est, lors d'une purge du premier tronçon (3), relié à un second tronçon (7) de la canalisation de refoulement (3, 7) chargé par la pression du récepteur.

2. Dispositif de production de gaz comprimé selon revendication 1, caractérisé en ce que:

a) le dispositif de manœuvre de la valve d'inversion (6) comprend une entrée de commande pneumatique (6c), reliée au premier tronçon (3) de la canalisation de refoulement (3, 7);

b) la valve d'inversion (6) est commutée quand la pression atteint une valeur prédéterminée dans le premier tronçon (3) de la canalisation de refoulement (3, 7).

3. Dispositif de production de gaz comprimé selon revendication 1, caractérisé en ce que la canalisation de refoulement (7) chargée par la pression du récepteur est constituée par le second tronçon (7) de la canalisation de refoulement (3, 7) situé entre le régulateur de pression (4, 13) et le récepteur.

4. Dispositif de production de gaz comprimé selon revendication 1, caractérisé en ce que:

a) la valve d'inversion (6) est logée dans le régulateur de pression (13);

b) la sortie de commande pneumatique de la valve d'inversion est réalisée sous forme de racord de sortie (11) du régulateur de pression (13).

5. Dispositif de production de gaz comprimé selon une quelconque des revendications 1 à 4, caractérisé en ce que le dispositif de purge (5) du régulateur de pression (4, 13) et le dispositif d'ouverture (1b, 8, 9, 6; 1b, 8, 9, 12, 11) du clapet d'aspiration (10) du compresseur (1) sont dimensionnés et réalisés de façon que le dispositif de purge du régulateur de pression (4, 13) et le dispositif d'ouverture déchargent à peu près également le compresseur (1) quand la pression du gaz comprimé transmis au récepteur atteint une valeur prédéterminée.

Fig 1

Fig 2